# EUROPEAN PATENT APPLICATION

(11) **EP 2 186 677 A1**
(43) Date of publication of application: **19.05.2010**
(21) Application number: 09168176.7
(22) Date of filing: 19.08.2009
(51) Int. Cl.: B60N 3/00, B60N 3/02, G09F 21/04

(54) **Advertisement handle coupled with grab bar of passager transportation vehicles**

(30) Priority: 13.11.2008 BR MU8802555 U
(71) Applicant: Pacheco, Antonio Ricardo, 86078-693 Londrina, PR (BR)
(72) Inventor: Pacheco, Antonio Ricardo, 86078-693 Londrina, PR (BR)
(74) Representative: Robba, Pierpaolo

(57) **Abstract**

The invention relates to an ADVERTISEMENT HANDLE COUPLED WITH GRAB BAR OF PASSENGER TRANSPORTATION VEHICLES, comprising a construction solution in which there is a panel (1) assemble onto translucent material to display the message, with a handle (4) (at its bottom), and intended to offer more comfort and safety to one or two users, especially in short trips.

Said panel (1) and handle (4) are fastened onto the grab bar in the transportation vehicle by a device (3) that contains a hole (5) through which such bar passes, and a flexible strap (7) is used to connect the handle (4) and the fastening device (3) which provides the necessary balance to the set.

## Description

### INTRODUCTION

The present specification relates to a device that makes use of grab bars with which passenger vehicles in general are equipped: buses, trains, boats, etc., for posting advertisements or institutional announcements of any kind.

Therefore, such device, which is actually a support that offers more comfort to users when they have to use the grab bar, is made of translucent material, and it may be injected in parts or in a single piece, allowing a wide variety of messages to be posted, including institutional messages, entertainment messages or simply advertising messages.

Thus, the present report describes the operation of an advertising device coupled with the grab bar already available in passenger vehicles in general, mainly buses and trains.

### PRIOR ART

Systems and devices used to display messages, including advertisements, are widespread, namely when applied to means of passenger transportation, ranging from small displays to complex electronic systems. In other words, this type of system or device has been long used and it has been presented in many different ways.

However, none of the advertising devices mentioned in prior art operates with grab bars that are already installed in passenger transportation vehicles; and none of them proposes some usefulness that offers comfort to passengers using the aforementioned grab bar.

Searches conducted in prior art allowed selecting documents involving various operational conceptions. Those devices whose operation or whose application is different from the proposed one were disregarded. After that, the following documents were selected:
MU 7.502.195-1, filed on Oct/17/1995, under the title of ADVERTISING SIGN IN SUPERMARKET CARTS, comprising two 33-cm long, 8-cm high metal plate, fastened with rivets onto the central parts of carts, one on each side, used as support for advertising art, causing existing carts to be used as a means of communication.
MU 7.502.848-4, filed on Nov/30/1995, under the title of FIBERGLASS BUS STOP SHELTER EQUIPPED WITH BACKLIT DISPLAYS, comprising a way to use fiberglass, and the advantage of providing better finishing due to the easy handling of the product. There is more safety for users, since the backlit displays light the streets and avenues where they are installed.
MU 7.502.912-0, filed on Dec/13/1995, under the title of OUTER HANDLE FOR BAG-TYPE PACKAGES AS ADVERTISING MEDIA, obtained by a single rectangular body made of plastic or similar material, folded in half, forming a double rectangle, where it is possible to see the presence of a hollow rectangular-shaped element with round corners, for the transportation of packages; and where the empty space in the handle is designed for third parties' advertising.

PI 0.603.250-8, filed on Aug/04/2006, under the title of SYSTEM TO DISPLAY ADVERTISING MESSAGES INSTALLED INSIDE PASSENGER TRANSPORTATION SERVICE VEHICLES, comprising an inventive solution in passenger transportation road vehicles (A), with different types of information to attract attention of such passengers and consequently attract their attention to the advertisements posted there; in order to do that, such system comprises modern (1), liquid crystal display monitors, plasma monitors and similar ones, installed mainly on the front panel (B) of such vehicles (A) and also on the back part of headrests (C1) of front seats (C), and the exhibition of information and charts is controlled by a controlling device (2) connected to a wireless network to obtain the already mentioned information, directly connected to the said monitors.

It is possible to state that none of the documents found refer to the operation concept in question. Even though PI 0.603.250-8 is the one that is closest to such concept, it pertains to a quite complex concept that does not require electronic devices. Furthermore, as one may see in the corresponding specification, its application is directly associated with the dashboard/panel of passenger vehicles, and this seems to compromise the safe driving of such vehicle, because messages and images are shown through a bright medium, such as plasma screens and other similar technology that may replace it.

The subject matters of the other patents have no connection whatsoever with the present subject matter, except for the fact that they are advertising media that make use of physical spaces. However, the spaces used are in packages, bus stop shelters and side and front of supermarket carts.

Therefore, the present patent refers to a new operation concept, both in terms of the location where the device is coupled, i.e.: with the grab bar of passenger transportation vehicles, and in the fact that the message displaying, strictly speaking, requires the use of electrical, electronic devices or any backlit device, and the translucence of the material of which the main body of the panel is made.

### ABSTRACT OF THE PATENT SUBJECT MATTER

Considering the information pertinent to the above-mentioned prior art, the purpose of the present specification is a constructive solution applied to an advertising panel coupled with grab bars already present in passenger transportation vehicles, comprising an anatomical support to be grabbed by one or more users, causing them to grab the handles instead of grab bars, especially during short trips.

Furthermore, the stability and safety in the use are ensured both by the design of the support and by the lock-in point, provided by a through-going body, which may be mobile or not, connected with the anatomical support by a nylon strap, or a similar item that allows the flexible movement between the through-going body and the anatomical support.

### DESCRIPTION OF FIGURES

The improvements in question are characterized by representative drawings of the proposed construction solution, so that one can have a clear view of both the body to be fastened to the grab bar and the anatomical handle, as well as the connecting strap between them.

Such figures, which express the preferred way to use the idealized product, form the basis for describing the present report, by means of consecutive and numbered references, where the construction and operation aspects are clarified, which may not have been understood by the representation adopted, and accurately defining the patent claimed.

Such figures are merely illustrative and they may represent variations, provided they are not different from what was initially claimed.

Therefore, the following figures describe the invention:

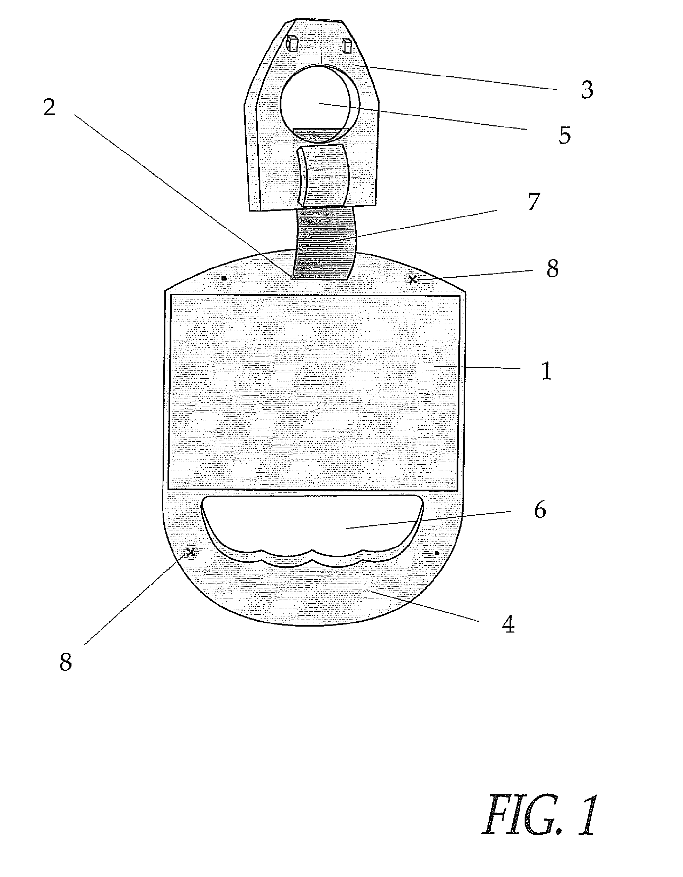

- FIGURE 1 offers a frontal view of the panel, with special emphasis on a possible shape of the main body (1) or advertising panel, as well as the strap (7) connecting the main body (1) and the through-going body (3), with a hole (5) through which the grab bar will pass. Such grab bar is not demonstrated and it is a grab bar commonly used on passenger transportation vehicles. The figure allows viewing the sector (2) that receives the strap (7). Such sector is planned for in the main body (1) or panel. The figure also allows viewing the handle (4) with an anatomical sector (6) for the user's hand, and also with fastening screws (8) for when the main body (1) is made of two connectable parts.

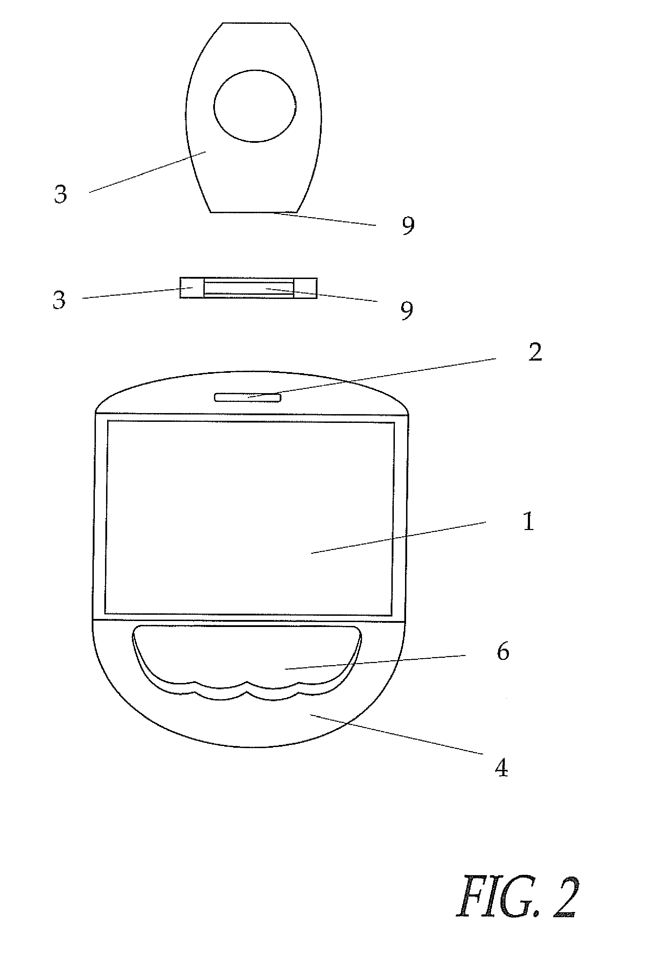

- FIGURE 2 offers construction details of the through-going body (2) with special attention to the cavity (9) that receives the fastening strap (7). It is also possible to see the hollow sector (2), the panel (1) strictly speaking, and the anatomical sector (6) of the handle (4).

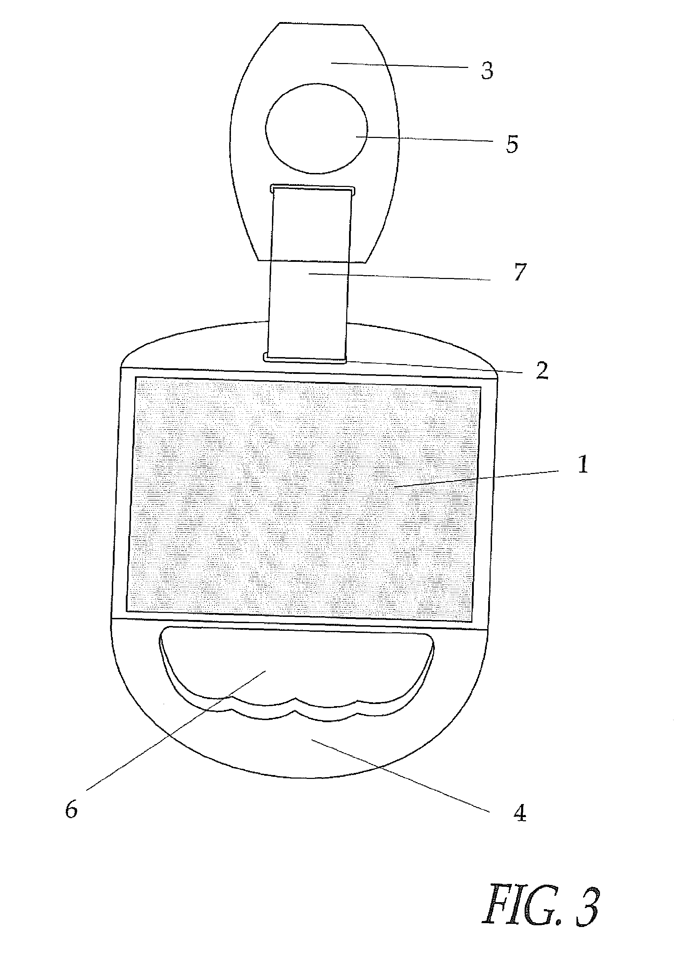

- FIGURE 3, also in a previous image, shows the set (1 and 3) duly connected by the strap (7).

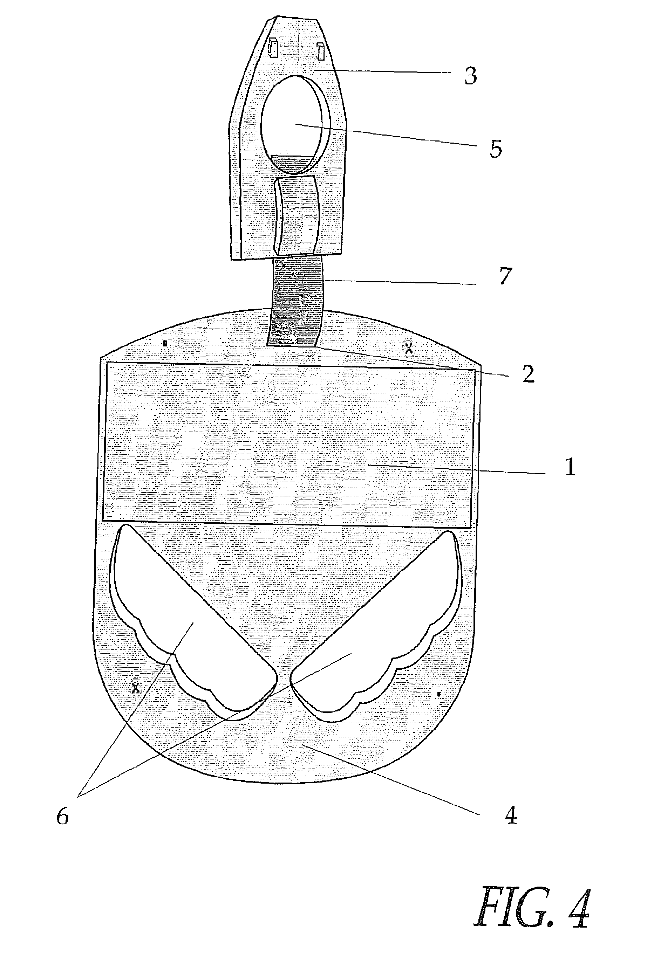

- FIGURE 4, also in a previous image, describes the construction design of such device, showing that it has, in the handle (4), anatomical sectors (6), designed for the hands of two users.

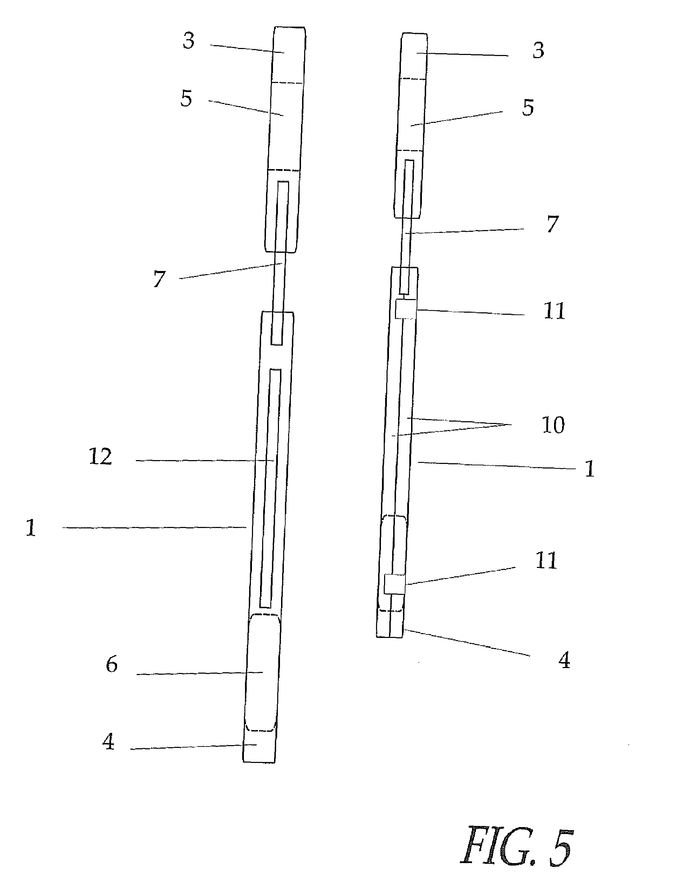

- FIGURE 5 - a side view - it indicates two assembly possibilities, i.e.: in a single block and in two faces that may be fastened by screws and hinges. In the first case, there is a cavity (12) to receive the advertising material; in the second one, hinges (11) allow opening the halves (10) for the insertion of the same material between them. The two options have basically the same component and element, i.e.: main body or panel (1), through-going body (3) with hole (5) through which the grab bar passes, connected to each other by the strap (7), and the handle (4).

### DETAILED DESCRIPTION OF THE PATENT SUBJECT MATTER.

Due to the prior art findings, as described, the subject matter of the present specification is consistent because it offers improvements that allowed conceiving a safety handle that, when coupled with the grab bar available in passenger transportation vehicles, can be used for displaying all sorts of messages, including advertising and institutional messages, offering more comfort to one or two users standing during the trip.

Such conception describes a through-going body (3) with a hole (5) through which the ordinary grab bar passes, connected by a flexible strap (7) to an advertising panel (1) with a handle (4), which may contain two anatomical sectors (6) so that one or more users may grab it during the trip.

It is important to note that the through-going body (3) may be fixed or mobile with respect to the grab bar, and the main body (1) may solved by injection in a single block or double face, with the advertising material inserted in a cavity (9), in the first case, or between the two faces, in the second case.

## Claims

1. ADVERTISEMENT HANDLE COUPLED WITH GRAB BAR OF PASSENGER TRANSPORTATION VEHICLES, **characterized by** the fact that advertising messages are displayed in a translucent panel (1) coupled with the grab bar that exists in passenger transportation vehicles in general,.

2. ADVERTISEMENT HANDLE COUPLED WITH GRAB BAR OF PASSENGER TRANSPORTATION VEHICLES, according to claim 1, is **characterized by** the fact that the main body (1), where the message is displayed, comprises (at the bottom) a handle (4) with an anatomical sector (6) that may be grabbed by one or two passengers.

3. ADVERTISEMENT HANDLE COUPLED WITH GRAB BAR OF PASSENGER TRANSPORTATION VEHICLES, according to the previous claims, it is **characterized by** the fact that the body (1) where the message is displayed, has (at the top) a through-going body (3) with a hole (5) through which the grab bar already installed in the transportation vehicle will pass.

4. ADVERTISEMENT HANDLE COUPLED WITH GRAB BAR OF PASSENGER TRANSPORTATION VEHICLES, according to previous claims, it is **characterized by** the fact that the stability of the set results from the flexible connection of the body (3) to the handle (4), by means of a strap (7).

5. ADVERTISEMENT HANDLE COUPLED WITH GRAB BAR OF PASSENGER TRANSPORTATION VEHICLES, according to the previous claims, it is **characterized by** the fact that the body (1) or panel may be of the single block type or double-face type.

6. ADVERTISEMENT HANDLE COUPLED WITH GRAB BAR OF PASSENGER TRANSPORTATION VEHICLES, according to claim 5, **characterized by** the fact that the body (1) may have a cavity (9) to receive advertising material.

7. ADVERTISEMENT HANDLE COUPLED WITH GRAB BAR OF PASSENGER TRANSPORTATION VEHICLES, according to claim 5, it is **characterized by** the fact that the body (1) may have two faces (10) that may be fastened by screws and (8) hinges (11).
